# EUROPEAN PATENT APPLICATION

(11) **EP 3 562 145 A1**
(43) Date of publication of application: **30.10.2019**
(21) Application number: 18169220.3
(22) Date of filing: 25.04.2018
(51) Int. Cl.: H04N 5/347, G06K 9/00, B60R 1/12

(54) **METHOD AND APPARATUS FOR OPERATING AN ADVANCED DRIVER ASSISTANCE SYSTEM OF A VEHICLE**

(71) Applicant: Bayerische Motoren Werke Aktiengesellschaft, 80809 München (DE)
(72) Inventor: Riesenweber, Tobias, 85256 Vierkirchen (DE); Unger, Christian, 82216 Maisach (DE); Dehlink, Bernhard, 81673 München (DE)

(57) **Abstract**

The invention relates to a method and an apparatus for operating an advanced driver assistance system of a vehicle. A vehicle's surroundings are captured as an image by means of digital and/or analog binning in order to determine at least one object from this image.

## Description

The invention relates to a method and an apparatus for operating an advanced driver assistance system of a vehicle.

Several functions of advanced driver assistance systems of highly automated vehicles and also autonomous vehicles are based on optical image capture. By way of example, the detection of persons and animals as well as objects in the vehicle's surroundings is essential in order to prevent accidents, in order to improve the safety of passengers, and of persons and animals within the vehicle's surroundings.

DE 102 20 825 A1 discloses a camera system for advanced driver assistance systems, wherein a camera acquisition device of the camera system is provided with image acquisition elements for the infrared range, which is used for detecting objects even in darkness.

Nevertheless, the detection of persons or animals in the vehicle's surroundings is made more difficult, or even impossible, in optical image capturing devices during low light levels, such as during dusk or night.

Accordingly, it is an object of the invention to provide an improved method for operating an advanced driver assistance system of a vehicle. In particular, the detection of objects at night is intended to be improved. It is a further object of the invention to provide a corresponding improved advanced driver assistance system and a vehicle with such an advanced driver assistance system.

These problems are solved by a method of operating an advanced driver assistance system according to claim 1, an advanced driver assistance system according to claim 9, as well as a vehicle, in particular a motorized vehicle, according to claim 15.

A first aspect of the invention relates to a method of operating an advanced driver assistance system of a vehicle, in particular a motorized vehicle, comprising the steps of: - illuminating a vehicle's surroundings by increasing light intensity of the vehicle's surrounding using a far light assistant system of the vehicle;
- capturing the vehicle's surroundings as an image by means of an optical image sensor of an image capturing device;
- processing the captured image by digital binning, wherein at least two adjacent pixels of the captured image are combined by combining, in particular adding, the brightness values of the at least two pixels; and
- determining at least one object of the vehicle's surroundings on the basis of the processed image.

The digital binning pursuant to the invention involves combining at least two adjacent pixels of a captured image. Preferably, this involves combining the digitally captured brightness values of the two adjacent pixels by means of adding and/or averaging.

A pixel pursuant to the invention comprises color values which a surface element of a sensor of the image capturing device captures during the image capture and/or which a dot of a digital graph has.

The use of digital binning enables the brightness values of the original pixels to be improved by combining several pixels in dependence on the intensity of the light level. By combining the brightness values of the plurality of pixels, the resolution of the captured image is decreased and the plurality of pixels is combined into a new, in particular larger, pixel. In addition, pixels of individual regions can be combined. In particular, the method according to the present invention enables an improvement in the detection of objects in the vehicle's surroundings by means of object detection algorithms to be achieved. Further, the signal-to-noise ratio in the captured image is improved by means of the method according to the invention, since the noise is distributed statistically, and this is largely reduced by combining several pixels by means of binning, since the individual brightness values of the pixels, which have been distorted by the noise, cancel each other out such that they are almost free of distortion. In addition, a binning of the method pursuant to the present invention can be adapted during the image capture in dependence on the light conditions without requiring the image capture to be interrupted.

A second aspect of the invention relates to a method of operating an advanced driver assistance system of a vehicle, in particular a motorized vehicle, comprising the steps of:
- illuminating a vehicle's surroundings by increasing light intensity of the vehicle's surrounding using a far light assistant system of the vehicle;
- capturing the vehicle's surroundings as an image by means of an optical image sensor of an image capturing device, wherein at least two adjacent surface elements, which in particular correspond to pixels of a captured image of the image sensor, are combined by means of analog binning by combining, in particular adding, charges of the at least two pixels of the image sensor; and
- determining at least one object of the vehicle's surroundings on the basis of the captured image.

The analog binning pursuant to the present invention involves combining the brightness values of at least two adjacent surface elements of an image sensor by means of physically combining charges, in particular adding charges, and transporting charges on the image sensor of the image capturing device.

In contrast to the digital binning, this alternative method does not require any additional signal processing in order to combine several pixels, in particular their brightness values, so that the image capture and object determination can be carried out with reduced computing power. In addition, the analog binning enables the exposure time to be reduced and, hence, the image capture to be accelerated because of the reduced number of pixels which needs to be stored.

A third aspect of the invention relates to an advanced driver assistance system comprising
- a far light assistant system for illuminating a vehicle's surroundings by increasing light intensity of the vehicle's surrounding;
- an image capturing device for capturing at least a vehicle's surroundings as an image by means of an image sensor operating on the basis of the measurement of light; and
- means for determining at least one object of the vehicle's surroundings on the basis of a processed and/or captured image.

A fourth aspect of the invention relates to a vehicle, in particular a motorized vehicle, comprising an advanced driver assistance system according to the invention.

In a preferred embodiment, the method according to the first or second aspect of the invention comprises the following additional step:
- comparing the captured image with at least one predetermined pattern of a lookup table and/or a lookup image.

This enables the detection of an object of the vehicle's surroundings to be carried out in a simplified manner. In particular, relevant objects, in particular persons and/or animals which represent a danger for the vehicle or which themselves are put in danger by the vehicle, are stored as a pattern.

Accordingly, in a preferred embodiment, the advanced driver assistance system according to the invention comprises means for comparing the captured image with at least one predetermined pattern of a lookup table and/or a lookup image. Preferably, the lookup table and/or the lookup image are stored in a storage device of the advanced driver assistance system.

In a further preferred embodiment, the method according to the first or second aspect of the invention comprises the following additional step:
- outputting at least one object of a list of objects in relation to the determined object, in particular by means of a video and/or audio output device.

In particular, this may enable a driver of the vehicle to be informed regarding a detected object which is present in the vehicle's surroundings.

Accordingly, in a preferred embodiment, the advanced driver assistance system according to the invention comprises means for outputting at least one object of a list of objects in relation to the determined object, wherein this is preferably done by means of a video and/or audio output device.

In a further preferred embodiment, the method according to the first or second aspect of the invention comprises the following additional step:
- determining whether the light level, in particular the daylight level, at and/or in the image capturing device falls below a predetermined threshold.

This can ensure that the binning and a deterioration of the image resolution associated therewith will only be used if this is necessary.

Accordingly, in a preferred embodiment, the advanced driver assistance system according to the invention comprises means for determining whether the light level, in particular the daylight level, at and/or in the image capturing device falls below a predetermined threshold.

In a further preferred embodiment of the method according to the first or second aspect of the invention, a lidar and/or a radar measurement is used, in particular used in addition, in order to determine the object.

Preferably, a position of objects can initially be determined by means of lidar and radar, which can subsequently be identified by means of the optical image capture.

In a further preferred embodiment of the method according to the first or second aspect of the invention, the binning extends over a predetermined two-dimensional pixel area with n x n pixels, preferably with 2 x 2 pixels, further preferably with 3 x 3 pixels, wherein n represents the integer number of pixels in one dimension which are used for the binning.

This may enable the capture of the pixels of the image sensor with analog binning or the processing of the pixels with digital binning to be carried out in an equal manner in the direction of the rows as well as in the direction of the columns, as a result of which the captured image and its brightness values are represented in a true and/or non-distorted manner.

In a further preferred embodiment of the method according to the first or second aspect of the invention, the binning extends at least over a pixel area with n x m pixels, wherein m represents the integer number of pixels in a first dimension and n represents twice the (integer) number of m pixels in a second dimension.

This may enable a certain area which is located in the first or second dimension of the vehicle's surroundings to be analyzed better.

In a preferred embodiment of the advanced driver assistance system, the advanced driver assistance system is operated using a lens of the image capturing device which has an aperture number of between F 1.5 and F 0.5, preferably between F 1.2 and F 0.9, further preferably an aperture number of F 1.0. In particular, this can increase the sensitivity of the lens.

In a further preferred embodiment of the advanced driver assistance system, the lens of the image capturing device has an adjustable focal length of between 10 mm and 20 mm, preferably of between 12 mm and 18 mm, a focal length of between 14 mm and 17 mm, and most preferably of 15 mm. Preferably, this also enables distant objects in the vehicle's surroundings to be captured.

In a further preferred embodiment of the advanced driver assistance system, the image capturing device has, within the horizontal field of vision of between -14° to +14°, a vertical resolution of at least 40 pixels per degree.

Preferably, the road and the radii of its curves, in particular on motorways/freeways, can, by means of the horizontal field of vision according to the invention, be examined more easily and better as regards potential objects in the vehicle's surroundings.

In a further preferred embodiment of the advanced driver assistance system, the advanced driver assistance system comprises lighting, in particular additional lighting, preferably a headlight and/or a laser beam.

Through the use of lighting, the incident light on at least one object of the vehicle's surroundings can be improved and increased, as a result of which the detection of this object is improved.

In a preferred embodiment of the advanced driver assistance system, the advanced driver assistance system additionally comprises
- means for processing the captured image; and/or
- video and/or audio means for outputting at least one object of a list of objects in relation to the determined object.

The features and advantages explained in relation to preferred embodiments of the method according to the first and/or second aspect of the invention also apply to the advanced driver assistance system according to the third aspect of the invention and the vehicle according to the fourth aspect of the invention in a corresponding manner and vice versa.

Further features and advantages of the invention and possibilities of its application will be clear from the following description with reference to the figures, in which the same reference signs are used for the same or corresponding elements of the invention throughout. The figures show, at least partly schematically:
- **Fig. 1a**: an embodiment of a first method of operating an advanced driver assistance system of a vehicle in accordance with the invention;
- **Fig. 1b**: an embodiment of a second method of operating an advanced driver assistance system of a vehicle in accordance with the invention;
- **Fig. 2**: an embodiment of a vehicle with an advanced driver assistance system according to the invention;
- **Fig. 3**: a further embodiment of a vehicle with an advanced driver assistance system in accordance with the invention;
- **Fig.4a**: an embodiment of a captured image in accordance with the invention; and
- **Fig. 4b**: a further embodiment of a captured image in accordance with the invention.

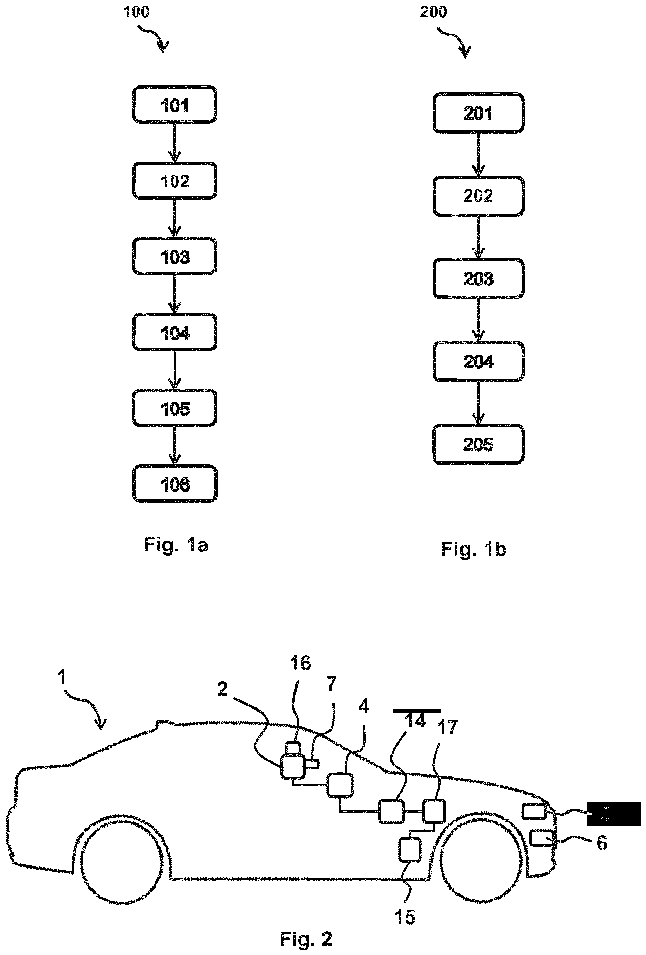

**Fig.** 1a shows an embodiment of a first method 100 of operating an advanced driver assistance system of a vehicle 1 in accordance with the invention.

In a first step 101, a determination takes place as to whether the light level, in particular the daylight level, at and/or in the image capturing device 2 falls below a predetermined threshold. If the light level falls below the determined threshold, a vehicle's surroundings is illuminated by increasing light intensity of the vehicle's surrounding using a far light assistant system of the vehicle. Preferably, the far light assistant system controls the lighting of the vehicle. The far light assistant system operates in an anti-glare mode. This means that a light beam of the lighting of the vehicle is controlled by the far light assistant so that a person is not blinded by the increased light intensity of the light beam.

In a further step 102, the vehicle's surroundings are captured as an image 13 by means of an optical image sensor of the image capturing device 2.

In a next step 103, the captured image 13 is processed by digital binning, wherein at least two adjacent pixels of the captured image 13 are combined by combining, in particular adding, the brightness values of the at least two pixels.

In a further step 104, the captured image 13 is compared with at least one predetermined pattern of a lookup table and/or a lookup image.

In a next step 105, at least one object 3 of the vehicle's surroundings is determined on the basis of the processed image 2.

In a last step 106, at least one object of a list of objects is outputted in relation to the determined object 3, in particular by means of a video and/or audio output device 4.

**Fig. 1b** shows an embodiment of a second method 200 of operating an advanced driver assistance system of a vehicle 1 in accordance with the invention.

In a first step 201, a determination takes place as to whether the light level, in particular the daylight level, at and/or in the image capturing device 2 falls below a predetermined threshold. If the light level falls below the determined threshold, a vehicle's surroundings is illuminated by increasing light intensity of the vehicle's surrounding using a far light assistant system of the vehicle. Preferably, the far light assistant system controls the lighting of the vehicle. The far light assistant system operates in an anti-glare mode. This means that a light beam of the lighting of the vehicle is controlled by the far light assistant so that a person is not blinded by the increased light intensity of the light beam.

In a further step 202, the vehicle's surroundings are captured as an image 13 by means of an optical image sensor of the image capturing device 2, wherein at least two adjacent pixels of the image sensor are combined by means of analog binning by combining, in particular adding, charges of the at least two pixels of the image sensor.

In a next step 203, the captured image 13 is compared with at least one predetermined pattern of a lookup table and/or a lookup image.

In a next step 204, at least one object 3 of the vehicle's surroundings is determined on the basis of the processed image 2.

In a last step 205, at least one object of a list of objects is outputted in relation to the determined object 3, in particular by means of a video and/or audio output device 4.

**Fig. 2** shows an embodiment of a vehicle 1 with an advanced driver assistance system in accordance with the invention.

The vehicle 1 comprises an image capturing device 2, at which means 16 for carrying out a threshold determination are arranged. This can in particular comprise a photoelectric sensor which captures the intensity of incident light from the vehicle's surroundings. Headlamps 5 can be switched on, in particular as an addition, if the intensity of the incident light is too low so that the vehicle's surroundings are better illuminated and so that, in turn, a higher intensity of light is incident on the image capturing device 2 and the means 16 for carrying out a threshold determination.

The image capturing device 2 comprises a lens 7, by means of which the aperture number as well as the focal length of the image capturing device 2 can be adjusted. The aperture number is between F 1.2 and F 0.9.

In addition, the image capturing device 2, in particular within the horizontal field of vision of from -14° to +14°, has a vertical resolution of at least 40 pixels per degree, in particular so as to be better suitable for capturing images in road traffic.

An optical image sensor, which captures the surroundings of the vehicle 1, is located within the image capturing device 2. This enables at least two adjacent pixels of the image sensor to be combined, in particular by means of analog binning, by combining, in particular adding, charges of the at least two pixels of the image sensor.

The image capturing device 2 further comprises means 14 for image processing. This can preferably be used for processing the captured image 13 by means of digital binning, wherein at least two adjacent pixels of the captured image 13 are combined by combining, in particular adding, the brightness values of the at least two pixels. The analog and digital binning can in particular be used individually and independently from each other. Preferably, this results in advantages if both methods are used in combination.

In addition, means 17 for comparing the captured image 13 with at least one predetermined pattern of a lookup table and/or a lookup image are arranged in the image capturing device 2.

Using a compared image 13 as a point of departure, an object 3, which is located in the vehicle's surroundings, can be determined by means 15 for determining an object 3. Preferably, a lidar and/or radar device 6, which is located in the engine compartment of the vehicle 1, can be used for this purpose.

Once the object 3 has been determined, this can be outputted visually and/or audibly by means of an output device 4 arranged in the vehicle 1. For this purpose, preferably a speech-supported voice output or a display in the interior of the vehicle can alert the driver to the determined object 3.

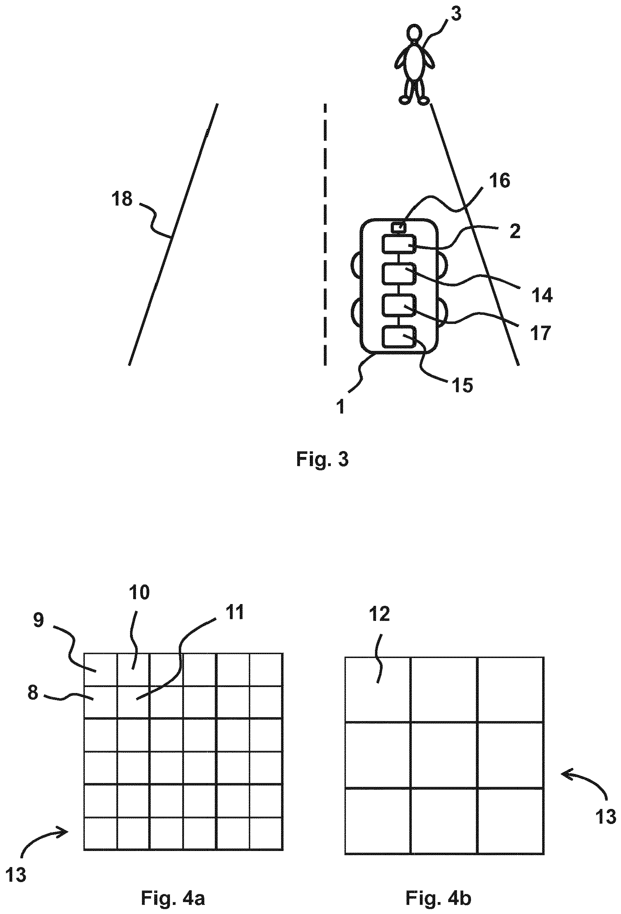

**Fig. 3** shows a further embodiment of a vehicle 1 with an advanced driver assistance system according to the invention.

In this representation, the vehicle 1 is on a road 18, whereby a person, thus in particular an object 3, is present at the edge of the road. An image 13 is captured by means of the image capturing device 2. In particular, this captured image 13 can be processed by means of image processing means 14, compared by means of image comparison means 17 and, thereafter, transmitted by means of object transmitting means 15 in order to determine an object 3, in this embodiment in particular a person, from the captured image 13.

**Fig. 4a** shows an embodiment of a captured image 13 according to the invention.

A first, second, third and fourth pixel 8, 9, 10, 11 are illustrated in this illustration, which are arranged adjacent to each other. The object determination can be improved by means of digital binning with these at least four pixels, which extend over a two-dimensional pixel area 12 with 2 x 2 pixels, in particular in general a pixel area 12 with n x n pixels, or preferably a pixel area 12 with 3 x 3 pixels.

The four pixels 8, 9, 10, 11 of the captured image 13 are combined in the course of the digital binning. Preferably, this involves combining the digitally captured brightness values of the four adjacent pixels 8, 9, 10, 11 by adding. On the one hand, this reduces the resolution of the captured image 13; however, this enables a higher light sensitivity of the pixel area 12 to be achieved.

When this principle is applied to all pixels of the captured image 13, the resolution of the captured image 13 in this embodiment is reduced by a factor of 4, since four pixels are combined in each case. Conversely, the intensity is increased accordingly. Thus, an object determination can also evaluate low light intensities or pixels for further processing which, in the originally captured image 13, are for example below a predetermined threshold level, or which are unusable in the originally captured image 13 because of noise.

In relation to the embodiment with analog binning, the four pixels 8, 9, 10, 11 correspond to four adjacent surface elements of the image sensor of the image capturing device 2. The captured image 13 corresponds to the image sensor with all its surface elements.

Here, the four adjacent surface elements are combined into one pixel area 12 by means of physical combination of charges, in particular addition of charges and transport of charges, i.e. even before the image processing as such. The result is a correspondingly increased brightness value for the pixel area 12. In corresponding manner, the resolution of the captured image 13 is reduced in this embodiment depending on the number of combined surface elements.

When this principle is applied to all surface elements of the image sensor, the resolution of the captured image 13 is reduced by a factor of 4 in this embodiment, since four surface elements are combined in each case. It also follows, however, that only a quarter of all surface elements need to be captured as digital values, which simplifies and accelerates the entire signal processing. Preferably, the transmission and analog-to-digital conversion can also be made faster, since less data needs to be transmitted and converted for example by means of an analog-to-digital converter. For this reason, the method according to the invention is advantageous in particular with image capturing devices 2 having a high resolution.

In particular, interference which arises during the course of the capture of the image can be reduced and preferably minimized, independent from whether analog or digital binning is carried out.

This comprises in particular noise, which results in an incorrect light intensity, which is captured on a surface element of the image sensor. Because of the random distribution of the noise over all surface elements of the image capturing device 2, the signal-to-noise ratio can be improved respectively by combining several adjacent surface elements in analog binning or by combining several adjacent pixels of the captured image 13 in digital binning, since the noise components of the adjacent surface elements or pixels will preferably cancel each other out or will compensate each other.

**Fig. 4b** shows a further embodiment of a captured image 13 according to the invention.

This representation is derived from Fig. 4a, wherein the first, second, third and fourth pixel 8, 9, 10, 11 have been combined to a pixel area 12, in particular to a two-dimensional pixel area 12 with 2 x 2 pixels, which improves the object determination. This can preferably be done retrospectively after the capture of the image 13 by means of digital binning.

Accordingly, this can further preferably also be carried out already during the capture of the image 13 by means of analog binning, whereby, as already explained in connection with Fig. 4a, the four pixels 8, 9, 10, 11 correspond to four adjacent surface elements of the image sensor.

Preferably, a pixel area 12 with n x m pixels can be defined, wherein m corresponds to the integer number of pixels in a first dimension and n corresponds to twice the (integer) number of m pixels in a second dimension. Further preferably, a different number of pixels can be used in both dimensions in order to define a pixel area 12. Further, it is also conceivable that analog binning is applied only to a predetermined area of the surface elements, or digital binning is applied to a predetermined pixel area 12. In addition, it is also possible for different geometrical shapes of a plurality of pixels, such as for example a honeycomb structure of pixels, to be combined into pixel areas 12. Hence, the captured image or the processed image can preferably be used for determining 105, 204, an object 3, preferably based on the addition of charges in analog binning or based on mathematical calculations in digital binning.

A further improvement in the detection of objects in the vehicle's surroundings can be achieved by object detection algorithms by increasing the light intensity for illuminating the vehicle's surroundings. In particular, an expanded full beam assistance system ("dynamic light assist") can be used for this purpose, which enables a partial dipping of the headlights.

Further, it is to be noted that the embodiments merely relate to examples which are not intended to limit the scope of protection, the applicability and the structure in any way. Rather, the preceding description will provide the person skilled in the art with directions for the implementation of at least one embodiment, whereby various different modifications, in particular as regards the functionality and the arrangement of the elements described, can be made without departing from the scope of protection resulting from the claims and their legal equivalents.

### LIST OF REFERENCE SIGNS

- 1: Vehicle
- 2: Image capturing device
- 3: Object
- 4: Output device
- 5: Lighting
- 6: Lidar / radar device
- 7: Lens
- 8: First pixel
- 9: Second pixel
- 10: Third pixel
- 11: Fourth pixel
- 12: Pixel area
- 13: Image
- 14: Means for image processing
- 15: Means for determining an object
- 16: Means for threshold determination
- 17: Means for comparing images
- 18: Road

## Claims

1. A method (100) of operating an advanced driver assistance system of a vehicle (1), in particular a motorized vehicle, comprising the steps of:- illuminating a vehicle's surroundings by increasing light intensity of the vehicle's surrounding using a far light assistant system of the vehicle;
- capturing (102) the illuminated vehicle's surroundings as an image (13) by means of an optical image sensor of an image capturing device (2);
- processing (103) the captured image (13) by digital binning, wherein at least two adjacent pixels of the captured image (13) are combined by combining, in particular adding, the brightness values of the at least two pixels; and
- determining (105) at least one object (3) of the vehicle's surroundings on the basis of the processed image (13).

2. A method (200) of operating an advanced driver assistance system of a vehicle (1), in particular a motorized vehicle, comprising the steps of:
- illuminating a vehicle's surroundings by increasing light intensity of the vehicle's surrounding using a far light assistant system of the vehicle;-capturing (202) the illuminated vehicle's surroundings as an image (13) by means of an optical image sensor of an image capturing device (2), wherein at least two adjacent surface elements, which in particular correspond to pixels of a captured image (13) of the image sensor, are combined by means of analog binning by combining, in particular adding, charges of the at least two pixels of the image sensor; and
- determining (204) at least one object (3) of the vehicle's surroundings on the basis of the captured image (13).

3. The method (100; 200) according to claim 1 or 2, comprising the following additional step:
- comparing (104; 203) the captured image (13) with at least one predetermined pattern of a lookup table and/or a lookup image.

4. The method (100; 200) according to at least one of the preceding claims, comprising the following additional step:
- outputting (106; 205) at least one object of a list of objects in relation to the determined object (3), in particular by means of a video and/or audio output device (4).

5. The method (100; 200) according to at least one of the preceding claims, comprising the following additional step:
- determining (101; 201) whether the light level, in particular the daylight level, at and/or in the image capturing device (2) falls below a predetermined threshold.

6. The method (100; 200) according to at least one of the preceding claims, wherein a lidar and/or a radar measurement is used, in particular used in addition, in order to determine (105) the object (3).

7. The method (100; 200) according to at least one of the preceding claims, wherein the binning extends over a predetermined two-dimensional pixel area (12) with n x n pixels, preferably with 2 x 2 pixels, further preferably with 3 x 3 pixels, wherein n represents the integer number of pixels in one dimension which are used for the binning.

8. The method (100; 200) according to claim 7, wherein the binning extends at least over a pixel area (12) with n x m pixels, wherein m represents the integer number of pixels in a first dimension and n represents twice the (integer) number of m pixels in a second dimension.

9. An advanced driver assistance system of a vehicle (1) comprising:
- a far light assistant system for illuminating a vehicle's surroundings by increasing light intensity of the vehicle's surrounding;
- an image capturing device (2) for capturing the illumninated vehicle's surroundings as an image (13) by means of an image sensor operating on the basis of the measurement of light; and
- means (15) for determining at least one object (3) of the vehicle's surroundings on the basis of a processed and/or captured image (13).

10. The advanced driver assistance system according to claim 9, further comprising:
- means (16) for determining whether the light level, in particular the daylight level, at and/or in the image capturing device (2) falls below a predetermined threshold;
- means (17) for comparing the captured image (13) with at least one predetermined pattern of a lookup table and/or a lookup image;
- means (14) for processing the captured image (13); and/or
- video and/or audio means (4) for outputting at least one object of a list of objects in relation to the determined object (3).

11. The advanced driver assistance system according to claim 9 or 10, wherein the advanced driver assistance system is operated using a lens (7) of the image capturing device (2) which has an aperture number of between F 1.5 and F 0.5, preferably between F 1.2 and F 0.9, further preferably an aperture number of F 1.0.

12. The advanced driver assistance system according to at least one of claims 9 to 11, wherein the image capturing device (2) has, within the horizontal field of vision of between -14° to +14°, a vertical resolution of at least 40 pixels per degree.

13. The advanced driver assistance system according to at least one of claims 9 to 12, comprising lighting (5), in particular additional lighting (5), preferably a headlight and/or a laser beam.

14. A vehicle, in particular a motorized vehicle, comprising an advanced driver assistance system according to any one of claims 9 to 13.
